Europäisches Patentamt

European Patent Office

Office européen des brevets

(11) Numéro de publication: **0 376 837 B1**

# FASCICULE DE BREVET EUROPEEN

(45) Date de publication de fascicule du brevet: **02.02.94** (51) Int. Cl.5: **G03H 1/06**

(21) Numéro de dépôt: **89403649.0**

(22) Date de dépôt: **26.12.89**

(54) **Procédé et dispositif holographique en lumière incohérente.**

(30) Priorité: **27.12.88 FR 8817225**

(43) Date de publication de la demande:
**04.07.90 Bulletin 90/27**

(45) Mention de la délivrance du brevet:
**02.02.94 Bulletin 94/05**

(84) Etats contractants désignés:
**AT BE CH DE ES GB GR IT LI LU NL SE**

(56) Documents cités:
**US-A- 4 602 844**

**PROCEEDINGS OF THE SOCIETY OF PHOTO-OPTICAL INSTRUM. ENGINEERS SPIE, vol. 88, 1977, pages 97-104, Bellingham, US; B. BARTHOLOMEW et al.: "Some useful applications of polarized light in holography and optical information processing"**

**APPLIED OPTICS, vol. 27, no. 6, mars 1988, pages 1183-1186; E. RIBAK et al.: "Signal-to-noise limitations in white light holography"**

**OPT. SPECTROSC., vol. 35, no. 2, août 1973, pages 195-199; I.A. DERYUGIN et al.: "Polarization contrast method in holography"**

(73) Titulaire: **FRANCE TELECOM**
**6, Place d'Alleray**
**F-75015 Paris(FR)**

(72) Inventeur: **Sirat, Gabriel**
**5, rue Leredde**
**F-75013 Paris(FR)**
Inventeur: **Dufresne, Eric**
**83, rue Saint Dominique**
**F-75007 Paris(FR)**
Inventeur: **Charlot, Didier**
**2, rue Rémy Dumoncel**
**F-75014 Paris(FR)**
Inventeur: **Maruani, Alain**
**5, rue Jean Lurçat**
**F-78210 Saint Cyr l'Ecole(FR)**

(74) Mandataire: **Schrimpf, Robert et al**
**Cabinet Regimbeau**
**26, Avenue Kléber**
**F-75116 Paris (FR)**

EP 0 376 837 B1

**APPLIED OPTICS, vol. 8, no. 2, février 1969, pages 393-397; A. KOZMA et al.: "Bias level reduction of incoherent holograms"**

**OPTICS LETTERS, vol. 10, no. 1, janvier 1985, pages 4-6; G. SIRAT et al.: "Conoscopic holography"**

## Description

La présente invention concerne le domaine de l'holographie.

Elle concerne plus précisément le domaine de l'holographie obtenue en lumière incohérente, et dénommée généralement "holographie conoscopique" par les spécialistes.

Un dispositif permettant d'obtenir une holographie conoscopique en lumière incohérente est décrit dans le document US-A-4 602 844.

Le dispositif décrit dans ce document comprend comme illustré schématiquement sur la figure 1 annexée, un cristal biréfringent inséré entre deux polariseurs circulaires.

Ce cristal décompose un rayon incident en, d'une part, un rayon ordinaire, affecté d'un indice de réfraction $n_o$, d'autre part, un rayon extraordinaire, affecté d'un indice de réfraction variable en fonction de l'angle d'incidence $\theta$, soit $n_e(\theta)$ cet indice de réfraction variable.

Ces deux rayons se propagent à des vitesses différentes à l'intérieur du cristal. De ce fait, ils en sortent déphasés. L'holographie conoscopique se base sur le fait que ce déphasage est fonction de l'angle d'incidence $\theta$. Les deux rayons interfèrent après avoir traversé le polarisateur de sortie, de sorte que l'intensité du rayon résultant est fonction également de l'angle $\theta$. Autrement dit, contrairement à l'holographie classique, chaque rayon incident produit sont propre rayon de référence. L'ensemble des rayons situés sur un cône d'axe parallèle à l'axe optique du cristal et d'angle ouverture $\theta$ donnera la même intensité sur le plan d'observation.

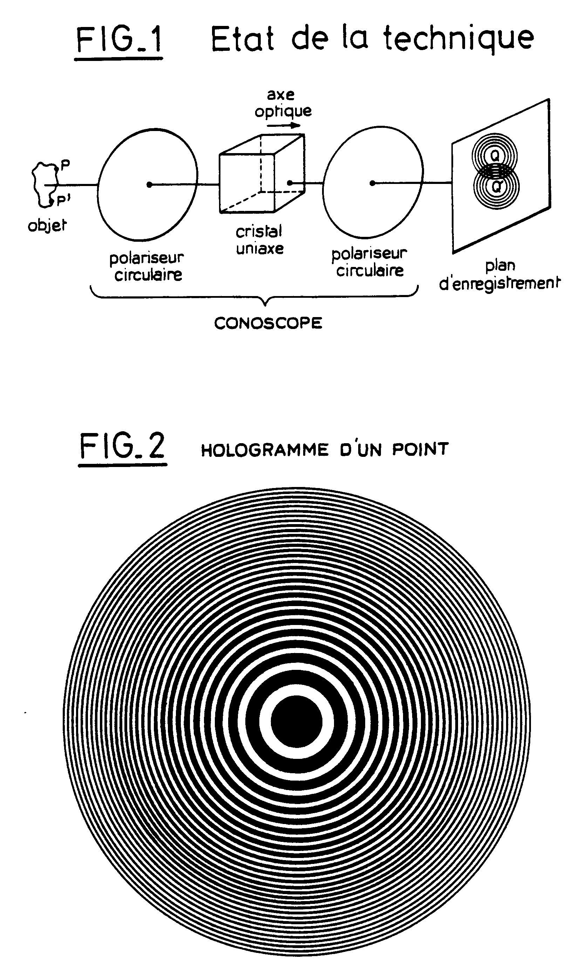

L'hologramme conoscopique d'un point obtenu à l'aide du dispositif précité correspond, comme illustré sur la figure 2 annexée à une zone de Fresnel, c'est-à-dire à une série de franges annulaires et concentriques d'interférence.

L'hologramme conoscopique d'un objet est la superposition des hologrammes de chacun des points composant l'objet. Les figures 3b et 3c du document US-A-4 602 844 précité montrent respectivement l'hologramme de 2 et 3 points d'un objet plan.

L'hologramme résultant contient toute l'information utile, de sorte qu'il est possible de reconstruire en trois dimensions l'objet initial.

Le système conoscopique réalise une transformation linéaire entre l'objet et son hologramme.

La réponse percussionnelle du système, qui caractérise la transformation linéaire, s'écrit :

$$(1) \quad T(x', y') = 1 + \cos(\alpha r^2),$$

où

$r^2 = x'^2 + y'^2$, et :

$$(2) \qquad \alpha = 2\pi L \, \frac{\Delta n}{\lambda n_0^2 \, Z_e^2} \, ,$$

avec

$\lambda$       : longueur d'onde de la source,
$L$       : longueur du cristal,
$n_0$       : indice ordinaire du cristal,
$\Delta n$       : valeur absolue de la différence entre les indices ordinaire et extraordinaire,
$x, y, z$       : coordonnées dans le volume objet,
$x', y'$       : coordonnées dans le plan de l'hologramme,

$$(3) \quad Z_e = Z(x, y) - L + \frac{L}{n_0},$$

où $Z(x, y)$ est la distance entre le plan holographique et le point objet considéré, situé à la position latérale $(x, y)$. Le paramètre de Fresnel $\alpha$ s'écrit encore :

$$(4) \qquad \alpha = \frac{\pi}{\lambda_{eq}(Z_c)Z_c},$$

définissant ainsi une longueur d'onde équivalente $\lambda_{eq}$ :

$$(5) \qquad \lambda_{eq} = \lambda n_0^2 \frac{Z_c}{\Delta n \, 2L},$$

ou encore :

$$(6) \qquad \alpha = \frac{\pi}{\lambda f_c},$$

définissant ainsi la distance focale $f_c$ de la lentille de Fresnel :

$$f_c = n_0^2 \frac{Z_c^2}{\Delta n \, 2L}. \quad (7)$$

Dans le cas ou l'objet considéré est plan ($\alpha$ = constante) la longueur d'onde équivalente et la focale $f_c$ sont des constantes du système.

La relation (4) montre alors que l'hologramme conoscopique d'un point enregistré à la longueur d'onde $\lambda$ est similaire à l'hologramme de ce même point enregistré en lumière cohérente (holographie de Gabor) à la longueur d'onde équivalente $\lambda_{eq}$ ; notons que l'hologramme conoscopique mesure des intensités et non des amplitudes.

Les distances $Z_c$ et L étant du même ordre de grandeur et $\Delta n$ étant de l'ordre de O,1, la longueur d'onde $\lambda_{eq}$ est supérieure à la longueur d'onde réelle d'enregistrement $\lambda$ ; typiquement $\lambda_{eq}$ = 3 à 100$\mu$m.

Il s'en suit que la résolution latérale dans l'hologramme (proportionnelle à la longueur d'onde $\lambda$ ) est plus faible en holographie conoscopique qu'en holographie classique ; elle est de l'ordre de quelques dizaines de micromètres.

Comme indiqué précédemment, l'hologramme enregistré avec un dispositif conoscopique contient toute l'information utile.

Par exemple pour l'hologramme d'un point correspondant à une zone de Fresnel :
- le centre de la zone et le point objet sont sur la même droite, parallèle à l'axe optique, et si le point objet est translaté, transversalement ou latéralement, l'hologramme se translate indentiquement dans le plan holographique. Les coordonnées du centre $C(x_o, y_o)$ de la zone de Fresnel sont donc égales, aux deux premières coordonnées du point $P(x_o, y_o, z_o)$ holographié.
- l'intensité de l'hologramme donne l'énergie lumineuse dans le cône d'ouverture de lumière.
- l'espacement des franges fournit la distance de l'objet au plan d'observation, indépendamment de la position du dispositif conoscopique. On peut en effet écrire :

(8)    $Z_c = R^2/F\lambda_{eq}$ et

(9)    $Z(x,y) = Z_c + L - L/n_0 = R^2/F\lambda_{eq} + L - L/n_0$

avec R le rayon de la zone de Fresnel et F le nombre de franges claires et sombres sur ce rayon.

Malgré les grands espoirs fondés sur l'holographie conoscopique précitée, celle-ci n'a pas connu jusqu'ici de développements industriels.

Cela semble du au fait que l'hologramme ainsi obtenu s'avère en fait assez difficile à exploiter.

Les inventeurs ont déterminé que l'hologramme conoscopique englobe en fait deux informations parasites correspondant respectivement au fond continu cohérent et à une image conjuguée qui brouillent l'information de base suffisante pour reconstruire l'objet.

Ces deux informations parasites superposées à l'information utile lors de l'enregistrement d'un hologramme conoscopique peuvent être mises en évidence en éclairant l'hologramme conoscopique enregistré sur un film photosensible par une onde plane monochromatique. On observe alors en effet trois faisceaux diffractés : le premier représente l'onde directement transmise par le film et correspond au fond continu ; le second est une onde sphérique divergeant d'un objet virtuel qui est la réplique de l'objet original ; le troisième est une onde sphérique convergeant vers une image réelle conjuguée de l'objet située symétriquement à l'image virtuelle par rapport au plan de l'hologramme.

Les deux informations parasites précitées (fond continu et image conjuguée) peuvent également être mises en évidence par l'approche plus théorique suivante.

Dans le cas d'objets plans, la transformation linéaire entre l'intensité I(x, y) de l'objet et l'intensité H(x', y') dans l'hologramme est une convolution :

$$(10) \qquad H(x', y') = I(x, y) * T(x, y).$$

Après développement de l'équation de convolution (10), l'hologramme apparaît comme une transformée de Fresnel :

$$(11) \qquad H(x',y') = I_0 + I(x,y) \ \overline{\ } \cos(\alpha r^2)$$

ou encore

$$(12) \quad H(x', \ y') = I_0 \ -1/2I(x, \ y) \ {}^{*}e^{j \alpha r^2} \ - \ 1/2I(x, \ y) \ {}^{*}e^{-j \alpha r^2}$$

où

$I_0$ représente l'intensité du fond continu qui pénètre directement à travers le système et

$$1/2I(x, \ y) \ {}^{*}e^{-j \alpha r^2}$$

représente l'image conjuguée.

La présente invention a maintenant pour but de proposer des moyens permettant de supprimer le fond continu et l'image conjuguée de l'hologramme enregistré.

Ce but est atteint selon l'invention grâce à un procédé de reconstruction d'une image d'un objet sans images parasites avec génération d'un hologramme, en lumière incohérente, comprenant les étapes consistant à :

- i) enregistrer à travers un système conoscopique comprenant un cristal biréfringent inséré entre deux polariseurs circulaires, plusieurs différents hologrammes conoscopiques d'un même objet, sans déplacement relatif de celui-ci, selon différentes configurations de polarisation respectives, du système conoscopique, et numériser la pluralité de différents hologrammes afin de former une pluralité de signaux numériques, chacun correspondant à un des hologrammes conoscopique,

- ii) reconstruire numériquement une image de l'objet, la reconstruction incluant la combinaison de ces signaux d'une telle manière que les informations correspondant au fond continu et à l'image conjuguée sont supprimées dans l'image reconstruite.

Selon une autre caractéristique avantageuse de la présente invention, les polariseurs circulaires sont formés d'un polariseur linéaire et d'une lame quart d'onde susceptibles de rotation relative, et coupés à des moyens d'entraînement en rotation, et les différentes configurations de polarisation sont obtenues successivement par rotation du polariseur linéaire et/ou de la lame quart d'onde grâce aux moyens d'entraînement.

La présente invention concerne également un dispositif pour la mise en oeuvre du procédé précité du type comprenant un système conoscopique comportant un cristal biréfringent inséré entre deux polariseurs circulaires, caractérisé par le fait qu'il comprend :

- des moyens permettant d'enregistrer à l'aide dudit système conoscopique, différents hologrammes conoscopiques d'un même objet, sans déplacement relatif de celui-ci, selon différentes configurations de polarisations respectives du système conoscopique, et des moyens permettant de numériser la pluralité de différents hologrammes, afin de former une pluralité de signaux numériques, chacun correspondant à un des hologrammes conoscopiques, et

- des moyens aptes à reconstruire numériquement une image de l'objet, la reconstruction incluant la combinaison de ces signaux d'une telle manière que les informations correspondant au fond continu et à l'image conjuguée sont supprimées dans l'image reconstruite.

D'autres caractéristiques, buts et avantages de la présente invention apparaîtront à la lecture de la description détaillée qui va suivre et en regard des dessins annexés, donnés à titre d'exemples non limitatifs et sur lesquels, les figures 1 et 2 annexées qui illustrent l'état de la technique ayant déjà été décrites :

- la figure 3 représente le schéma général d'un dispositif conoscopique permettant de mettre en oeuvre la présente invention,
- la figure 4 illustre schématiquement un mode de réalisation préférentiel de moyens polariseurs proposés dans le cadre de la présente invention,
- la figure 5 représente un tableau d'exemples de configurations de polarisations obtenues avec les moyens polariseurs précités conformes à la présente invention,
- la figure 6 représente schématiquement un mode de réalisation du dispositif conforme à la présente invention,
- la figure 7A représente une vue schématique générale de moyens polariseurs conforme à un autre mode de réalisation de la présente invention, et
- la figure 7B représente une vue de détail de ces moyens.

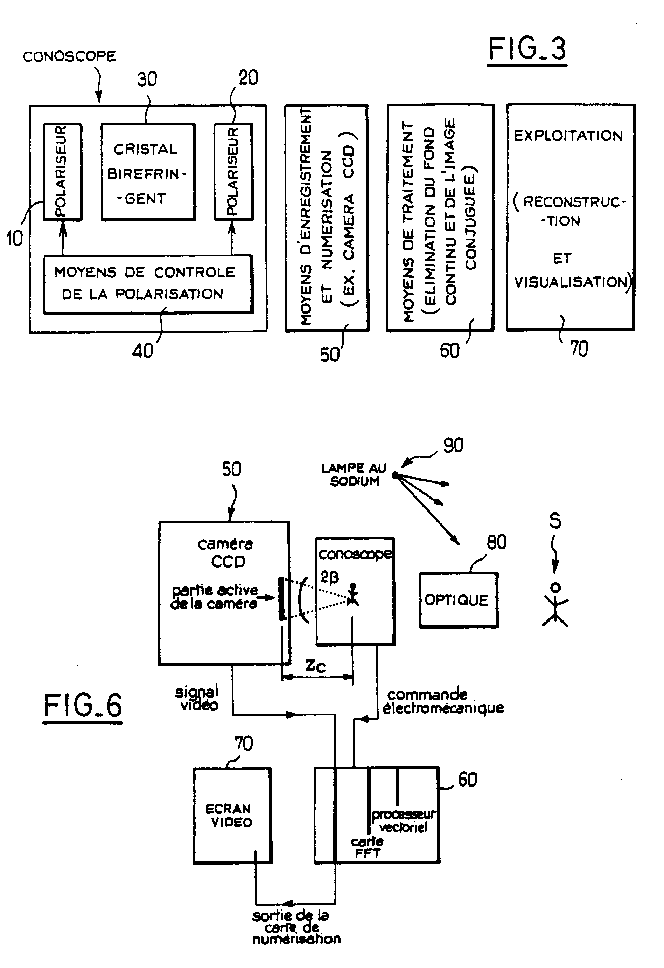

On aperçoit sur la figure 3 annexée un dispositif holographique conforme à la présente invention qui comprend pour l'essentiel : un conoscope, des moyens d'enregistrement et de numérisation 50, des moyens de traitement 60 et des moyens d'exploitation 70.

Le conoscope comprend un cristal biréfringent 30 inséré entre deux polariseurs 10, 20. Le conoscope comprend en outre des moyens 40 permettant de contrôler la polarisation.

Les moyens 50 sont conçus, en combinaison avec les moyens de contrôle 40, pour enregistrer et numériser différents hologrammes conoscopiques d'un même objet, sans déplacement relatif de celui-ci, sous différentes configurations de polarisation respectives. Les moyens 50 peuvent être formés d'une caméra CCD à transfert de charge.

Les moyens 60 sont conçus pour éliminer le fond continu et l'image conjuguée de l'hologramme enregistré et numérisé dans les moyens 50.

Les moyens 70 sont de préférence conçus pour reconstruire l'hologramme résultant et visualiser l'image correspondante. Les moyens 70 peuvent être utilisés à d'autres fins.

Le système conoscopique décrit dans le document US-A-4 602 844 comprend des polariseurs circulaires d'entrée et de sortie, qui sont constitués d'un polariseur rectiligne et d'une lame quart d'onde solidaire du polariseur rectiligne.

Dans le cadre du mode de réalisation, considéré actuellement comme préférentiel, de la présente invention, le polariseur rectiligne et la lame quart d'onde sont désolidarisés.

Cela permet d'imposer, par rotation de la lame quart d'onde, n'importe quelle polarisation à l'onde transmise.

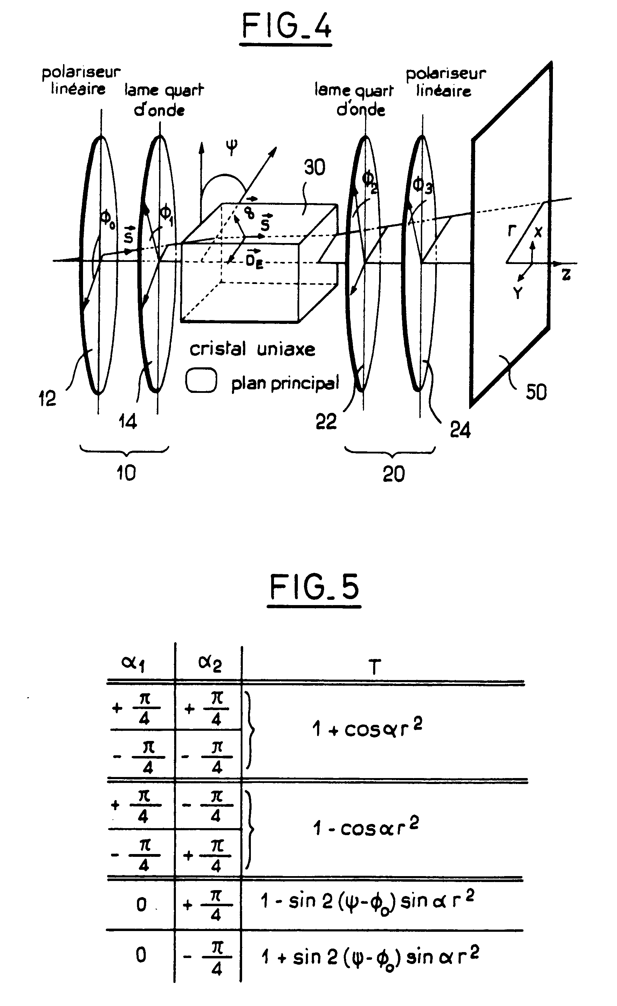

On aperçoit ainsi sur la figure 4 annexée, un ensemble polariseur d'entrée 10 qui comprend un polariseur linéaire 12 et une lame quart d'onde 14 ; un ensemble polariseur de sortie 20 qui comprend un polariseur linéaire 22 et une lame quart d'onde 24 ; un cristal biréfringent 30, intercalé entre les deux ensembles 10, 20 et un plan d'observation 50 situé en aval de l'ensemble polariseur de sortie par rapport à l'objet à examiner.

Le polariseur linéaire 12 et la lame quart d'onde 14 s'étendent perpendiculairement à l'axe Z. Ils sont non solidaires entre eux et donc susceptibles de rotation relative autour de l'axe Z.

De même le polariseur linéaire 12 et la lame quart d'onde 24 s'étendent perpendiculairement à l'axe Z. Ils sont non solidaires entre eux et donc susceptibles de rotation relative autour de l'axe Z par rapport au polariseur linéaire 12 et la lame quart d'onde 14 composant l'ensemble polariseur d'entrée.

La rotation des éléments précités est assurée par des moteurs intégrés aux moyens de contrôle 40.

Comme indiqué précédemment, le plan d'observation 50 est de préférence matérialisé par un système de prise de vue, par exemple une caméra CCD à transfert de charge.

Les angles $\phi_o$, $\phi_1$, $\phi_2$, $\phi_3$, repèrent la position des axes principaux de polarisation des diverses lames 12, 14, 22, 24, par rapport à un plan principal arbitraire passant par l'axe Z. Selon la figure 4 annexée, ce plan principal est défini par les axes Z et X. L'onde incidente $\vec{S}$ se transforme en l'onde $\vec{S'}$ à l'intérieur du cristal 30. Les vecteurs électriques des ondes extraordinaire et ordinaire associées sont $\vec{D}_e$ et $\vec{D}_o$.

L'angle $\psi$ représente l'inclinaison, par rapport au plan principal, du plan défini par l'axe Z et le vecteur d'onde $\vec{S}$ incidente.

On appelle $\alpha_1$ la différence $\phi_o - \phi_1$ et $\alpha_2$ la différence $\phi_2 - \phi_3$.

Par rotation d'une lame quart d'onde de $\pi/2$ un polariseur circulaire droit devient gauche ou inversement.

Par rotation d'une lame quart d'onde de $\pi/4$ un polariseur circulaire devient rectiligne.

Dans le premier cas, le déphasage supplémentaire introduit entre les deux ondes ordinaire et extraordinaire est de $\pi$. La fonction de transfert du système conoscopique sera du type $1 + \cos(\Delta\phi + \pi)$ soit $1 - \cos(\Delta\phi)$.

Dans le second cas où la polarisation de l'onde incidente sur le cristal est linéaire, le déphasage introduit est de $\pi/2$ et la fonction de transfert sera du type $\cos(\Delta\phi + \pi/2)$ soit $\sin(\Delta\phi)$.

Les arguments quailitatifs développés ci-dessus démontrent que par rotation de la lame quart d'onde 14 à l'entrée du système (ou le cas échéant de la lame quart d'onde 24) il est possible d'engendrer les deux réponses percussionnelles fondamentales à savoir $\cos(\Delta\phi)$ et $\sin(\Delta\phi)$.

La combinaison de ces réponses percussionnelles permet d'éliminer l'image conjuguée.

On va maintenant préciser les modalités précises d'un mode de mise en oeuvre préférentiel de l'invention.

Quatre prises de vue, successives sont effectuées après rotation appropriée des éléments composant les ensembles polariseurs.

Pour la première prise de vue, les polariseurs d'entrée et de sortie sont circulaires :

$$\alpha_1 = \alpha_2 = \pm\tfrac{\pi}{4}.$$

Les deux polariseurs sont circulaires droits ($+ \pi/4$) ou gauches ($- \pi/4$).

La réponse percussionnelle du système est alors :

(13) $\qquad T_0 = 1 + \cos(\alpha r^2).$

Pour la seconde prise de vue, les polariseurs d'entrée et de sortie sont également circulaires, mais croisés

$$\alpha_1 = -\alpha_2 = \pm\tfrac{\pi}{4}.$$

La réponse percussionnelle s'écrit :

(14) $\qquad T'_0 = 1 - \cos(\alpha r^2).$

Pour la troisième prise de vue le polariseur d'entrée est rectiligne :

$$\alpha_2 = +\tfrac{\pi}{4}, \alpha_1 = 0.$$

La réponse percussionnelle s'écrit :

(15) $\qquad T_1(\phi) = 1 - \sin 2(\psi - \phi_o)\sin(\alpha r^2).$

Pour la quatrième prise de vue, le polariseur d'entrée est encore rectiligne mais

$$\alpha_2 = -\tfrac{\pi}{4}, \alpha_1 = 0.$$

La réponse percussionnelle s'écrit :

(16) $\qquad T'_1(\phi) = 1 + \sin 2(\psi - \phi_0)\sin(\alpha r^2).$

Les fonctions de transfert obtenues dans les quatre cas précités sont rappelées dans le tableau de la figure 5 annexée.

On remarquera que la troisième fonction s'obtient aussi bien par $\alpha_2 = -\pi/4$ que par $\alpha_1 = 0$ à la condition de changer $\phi_0$ en $\phi_0 - \pi/2$. Ainsi les quatre fonctions de transfert s'obtiennent elles par simple ajustement des lames d'entrée (ou des lames de sortie).

Pratiquement, la rotation des axes principaux de polarisation des diverses lames peut être réalisée mécaniquement si celles-ci sont des lames cristallines ou électriquement si celles-ci sont des valves électro-optiques, telles que les valves commercialisées par la société DISPLAYTECH INC sous la référence LV 500A.

Il est ensuite possible, à partir de combinaisons linéaires simples des fonctions de transfert du tableau précédent d'obtenir les deux fonctions de transfert suivantes :

(17)     $T_0 = \cos\alpha r^2$

(18)     $T_1(\phi_0) = \sin[2(\psi - \phi_0)]\sin\alpha r^2$

ou encore en prenant respectivement $\phi_0 = 0$ et $\phi_0 = \pi/4$:

(17)     $T_0 = \cos\alpha r^2$

(19)     $T_1(0) = \sin2\psi \, \sin\alpha r^2$

(20)     $T_1(\pi/4) = \cos2\psi \, \sin\alpha r^2$

Si l'on appelle et les variables correspondant à et dans le domaine spectral les transformées de Fourier de chacune des fonctions de transfert s'écrit :

$$(21) \quad \bar{T}_0 = \frac{\beta}{\pi} \sin\beta\rho^2$$

$$(22) \quad \bar{T}_1(0) = \frac{\beta}{\pi} \sin2\theta \left[\cos\beta\rho^2 - \frac{\sin\beta\rho^2}{\beta\rho^2}\right] \quad \cdot$$

$$(22)' \quad \bar{T}_1(\pi/4) = \frac{\beta}{\pi} \cos2\theta \left[\cos\beta\rho^2 - \frac{\sin\beta\rho^2}{\beta\rho^2}\right]$$

avec

$\beta = \pi^2/\alpha$

Par conséquent, si l'on considère la combinaison linéaire suivante :

$$(23) \quad \bar{T}_2 = \bar{T}_0 + j \sin2\theta \, \bar{T}_1(0) + j \cos2\theta \, \bar{T}_1(\pi/4)$$

on obtient

$$(24) \quad \bar{T}_2 = j \frac{\beta}{\pi} \left[\exp[-j\beta\rho^2] - \frac{\sin\beta\rho^2}{\beta\rho^2}\right] = \bar{T}_3 + \bar{T}_4$$

Le problème qui se pose alors est d'éliminer $\tilde{T}_4$. D'après sa forme analytique $\tilde{T}_4$ n'est significative qu'autour de $\rho = 0$. Par conséquent si l'on veut effectuer cette correction pour $\beta\rho^2 \ll 1$ on peut faire l'hypothèse que le paramètre $\beta$ ne varie pas d'une manière significative sur l'épaisseur de l'objet (ce qui est le cas si l'on utilise une optique standard classique qui aura tendance à comprimer l'épaisseur en z de l'objet) et diffère peu de $\beta_0$ correspondant au plan moyen de l'objet. On peut alors approximer $\tilde{T}_4$ par $(j/\pi)$-$\beta_0$ autour de 0 et retrancher cette valeur dans le plan de Fourier. Pour des valeurs de $\beta\rho^2$ plus élevées, on peut approximer au deuxième ordre $\tilde{T}_4$ par $j\tilde{T}_0/(\beta_0\rho^2)$.

Ces traitements ayant été effectués, on peut considérer, avec une très bonne approximation, que la fonction de transfert du système est idéale (entre autres l'hologramme sera reconstruit sans les artefacts dus à l'image conjuguée) et s'écrit :

(25)    $T = T_3 = \exp[j\alpha r^2]$

En posant le problème en coordonnées cartésiennes, l'hologramme conoscopique enregistré, s'écrira donc :

(26)    $H(x', y') = \iint I(x,y) T[\alpha(x,y),(x-x'),(y-y')]dx\ dy$

soit encore :

(27)    $H(x',y') = \iint I(x,y) \exp[j\alpha(x,y)[(x-x')^2 + (y-y')^2]]dx\ dy$

En posant $\alpha(x,y) = \alpha_0 + \alpha_1(x, y)$ et en développant l'exponentielle autour de $\alpha_0$ on obtient

(28)

$$H(x',y') = \sum_{i=0}^{i=\infty} \iint \frac{j^i}{i!} I(x,y)\alpha_1(x,y)^i\ [(x-x')^2 + (y-y')^2]^i \exp[j\alpha_0[(x-x')^2 + (y-y')^2]]dx\ d$$

On peut écrire cela sous forme d'une série de convolution :

(29)
avec
$$H = \sum_{i=0}^{i=\infty} f_i * g_i$$

(30)
$$f_i(x,y) = \frac{j^i}{i!} I(x,y)\alpha_1(x,y)^i$$

(31)    $g_i(x,y) = (x^2 + y^2)^i \exp[j\alpha_0(x^2 + y^2)]$

On voit que le problème de reconstruction numérique se ramène alors à un problème de déconvolution.

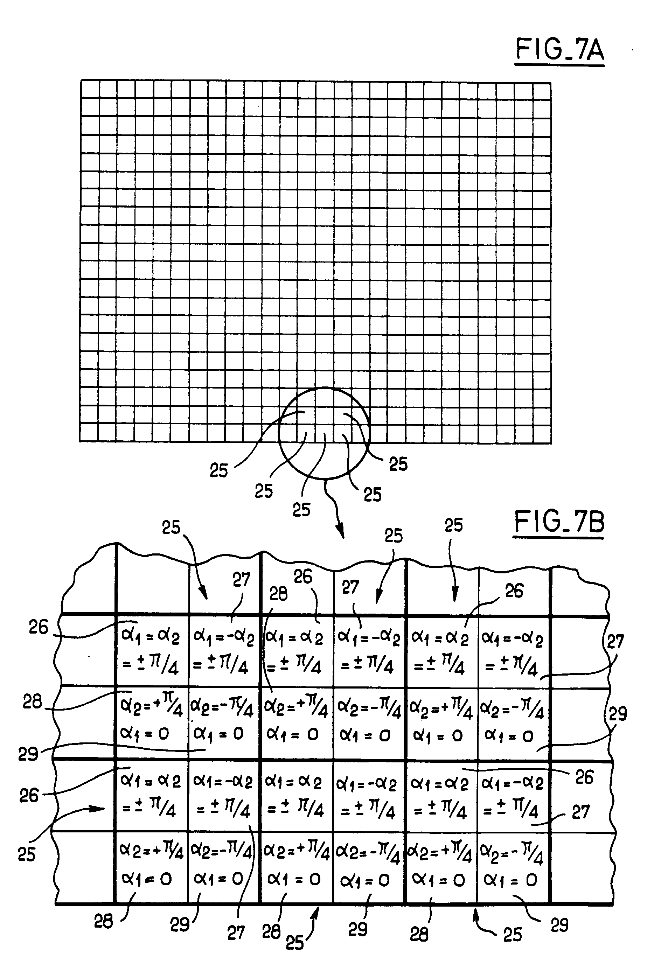

On a illustré schématiquement sur la figure 6 annexée, un mode de réalisation particulier de la présente invention.

La scène S est éclairée par une lame monochromatique à vapeur de sodium 90 et imagée à l'aide d'une optique 80 d'ouverture suffisamment grande pour obtenir la résolution latérale voulue. L'optique d'entrée 80 peut aller du microscope au zoom.

L'un au moins des polariseurs circulaires d'entrée ou de sortie 10, 20, est constitué d'un polariseur rectiligne 12, 22, et d'une lame quart d'onde 14, 24, désolidarisées et susceptibles de rotation 29 relative grâce à des moteurs électriques respectivement associés.

La rotation des axes optiques de polarisation des éléments 12, 14, 22, 24, intégrés au conoscope est effectuée mécaniquement ; cette solution mécanique permet de bénéficier d'éléments optiques de très haute qualité.

Le cristal 30 est un cylindre de calcite de longueur 35 mm et de diamètre 20 mm. (La résolution dans l'hologramme est modifiable en fonction des caractéristiques géométriques du système, soit la longueur et la biréfringence du cristal).

Les moyens d'enregistrement 50 sont formés d'une caméra à transfert de charge CCD de 512 x 512 pixels, avec une résolution de 10$\mu$m, sur une dynamique de 255 niveaux de gris (soit un codage sur 8 bits). Les hologrammes sont ainsi saisis directement et numérisés par la caméra CCD.

Les moyens de traitement 60 sont formés d'un microordinateur, équipé de cartes de traitement du signal et d'un coprocesseur arithmétique. Ces moyens 60 reçoivent les signaux numérisés issus de la caméra CCD 50. Ils pilotent les moteurs qui assurent l'entraînement des éléments 12, 14, 22, 24 intégrés au conoscope. Les moyens 60 possèdent dans leur mémoire, après traitement du signal, l'information en intensité et en profondeur nécessaire pour réaliser pratiquement en temps réel les reconstructions numériques permettant l'obtention de l'équation de la surface ou des déformations.

On notera que pour améliorer la fiabilité du système, le traitement peut être opéré sur une sommation de N images.

Pour donner un ordre de grandeur, les cartes actuelles de numérisation d'images peuvent effectuer la numérisation et la sommation de 128 images 512 par 512 en 4s.

Le signal correspondant à la reconstruction numérique issu des moyens 60 peut être appliqué à un écran vidéo 70 classique.

Différentes voies sont envisageables pour reconstruire numériquement une image des objets à l'aide de l'hologramme enregistré.

On distinguera la reconstruction numérique d'objets plans, de la reconstruction numérique d'objets tridimensionnels.

Dans le cas d'objets plans, trois méthodes de reconstruction numérique d'objet sont envisagées.

La première méthode de reconstruction numérique d'objets plans correspond à une simulation numérique de la reconstruction optique cohérente. On a en effet indiqué dans le document US-A-4 602 844, en regard de sa figure 5 que l'image d'un objet pouvait être obtenue en éclairant un film photographique sur lequel est enregistré un hologramme conoscopique, à l'aide d'une lumière cohérente.

Une transformée de Fresnel se ramène à une transformée de Fourier en vertu de la relation :

$$(32) \qquad I * e^{j\alpha r^2} = e^{j\alpha' r'^2} \, \mathrm{TF}(I e^{j\alpha r^2}),$$

où TF désigne l'opérateur transformée de Fourier.

Après multiplication de l'hologramme par un terme de phase convenable, l'objet peut donc être reconstruit par simple transformée de Fourier. Numériquement cette opération se réalise simplement par utilisation des algorithmes de transformée de Fourier rapide. Pour obtenir un accord satisfaisant entre le calcul numérique de la transformée de Fourier et la transformée de Fourier obtenue analytiquement, il suffit de choisir correctement le pas d'échantillonnage dans l'hologramme.

La seconde méthode de reconstruction numérique d'objets plans correspond à une simulation numérique de la construction optique conoscopique.

On a en effet montré dans le document US-A-4 602 844, en regard de sa figure 4, que l'image peut être obtenue en plaçant l'hologramme conoscopique à l'entrée du système d'enregistrement. Numériquement cela est traduit par la convolution de l'hologramme avec la fonction de Fresnel $\cos(\alpha r^2)$.

La troisième méthode de reconstruction numérique d'objets plans correspond à un filtrage de Wiener. Cette méthode est mise en oeuvre en traitant la transformée de Fourier de l'hologramme, par un filtre adapté, dans le domaine de Fourier.

Dans le cas de la reconstruction numérique d'objets tridimensionnels, la transformation linéaire n'est plus une convolution, elle s'écrit :

$$(27) \qquad H(x',y') = \int\int I(x,y) \, \exp[j\alpha(x,y)[(x-x')^2 + (y-y')^2]]dx \, dy$$

où l'intégrale s'effectue sur la surface $\Sigma$ de l'objet.

Dans le cas d'objet de faible extension longitudinale, c'est-à-dire :

$$(33) \qquad \frac{\Delta Z_c}{Z_c} \leqslant \frac{1}{\pi F},$$

où F est le nombre de franges dans la zone de Fresnel. L'équation (27) peut se ramener à une série de convolution soit :

$$(34) \qquad H = \sum_{n=0}^{n=\infty} a_n I_n * T_n$$

dans le domaine de Fourier :

$$(35) \qquad \tilde{H} = \sum_{n=0}^{n=\infty} a_n \tilde{I}_n \tilde{T}_n$$

Il est alors possible de déterminer une première approximation des fonctions $\alpha(x,y)$ et $I(x,y)$ réelles, en ne conservant que les deux premiers termes dans le développement en série. A l'ordre suivant les premières approximations de $I$ et $\alpha$ permettent de calculer les termes suivant dans le développement. Ceux-ci sont alors soustraits à l'hologramme de départ et on résout une nouvelle fois l'équation au second ordre.

Bien entendu la présente invention n'est pas limitée au mode de réalisation préférentiel qui vient d'être décrit mais s'étend à toutes variantes conformes à son esprit.

Selon une première variante, les éléments 12, 14 et 22, 24 composant le polariseur d'entrée 10 et le polariseur de sortie 20 sont fixes et non point susceptibles de rotation relative, et les différents polarisations requises pour obtenir plusieurs hologrammes répondant à des fonctions de transfert différentes, telles que celles indiquées sur le tableau de la figure 5, sont obtenues par insertion d'éléments polariseurs appropriés en amont et/ou en aval du cristal biréfringent 30.

Selon une seconde variante, le système conforme à la présente invention n'enregistre pas successivement 4 hologrammes conoscopiques correspondant respectivement à des polarisations différentes, mais enregistre simultanément 4 hologrammes correspondant à des polarisations différentes appropriées. Pour cela, l'un des polariseurs, de préférence le polarisateur de sortie 20 adjacent aux moyens d'enregistrement 50 est formé d'un réseau de P lignes Q colonnes de matrices 25, soit PQ matrices formées chacune de 4 sous-éléments 26, 27, 28, 29 correspondant respectivement aux polarisations requises. De préférence, chacune des PQ matrices 25 est réalisée sous forme d'une matrice à 2 lignes et 2 colonnes de sous éléments, comme illustré schématiquement sur la figure 7 annexée. Chacun des sous éléments 26, 27, 28, 29 correspond en surface à un pixel des moyens d'enregistrement 50.

La présente invention peut donner lieu à de nombreuses applications ; on citera à titre d'exemple non limitatif : le domaine de l'inspection automatique de pièces, de la reconnaissance d'objets et de la robotique, de l'interféromètrie holographique, et l'imagerie tridimensionnelle.

On notera par ailleurs que l'enregistrement des hologrammes conoscopiques, leur traitement pour éliminer le fond continu et l'image conjuguée, et la reconstruction pour exploitation peuvent être réalisés en diverses étapes séparées dans le temps.

## Revendications

1. Procédé de reconstruction d'une image d'un objet sans images parasites avec génération d'un hologramme en lumière incohérente, comprenant les étapes consistant à :
   - i) enregistrer a travers un système conoscopique comprenant un cristal biréfringent (30) inséré entre deux polariseurs circulaires (10, 20) plusieurs différents hologrammes conoscopiques d'une même objet, sans déplacement relatif de celui-ci, selon différentes configurations de polarisation respectives, du système conoscopique, et numériser la pluralité de différents hologrammes afin de former une pluralité de signaux numériques, chacun correspondant à un des hologrammes conoscopiques,
   - ii) reconstruire numériquement une image de l'objet, la reconstruction incluant la combinaison de ces signaux d'une telle manière que les informations correspondant au fond continu et à l'image conjuguée sont supprimées dans l'image reconstruite.

2. Procédé selon la revendication 1, caractérisé par le fait que l'étape i) consiste à enregistrer 4 hologrammes conoscopiques d'un même objet, sans déplacement relatif de celui-ci, selon différentes configurations de polarisation respectives.

3. Procédé selon l'une des revendications 1 ou 2, caractérisé par le fait que les polariseurs circulaires (10, 20) sont formés d'un polariseur linéaire (12, 22) et d'une lame quart d'onde (14, 24) susceptibles de rotation relative, et couplés à des moyens d'entraînement en rotation (40) et que les différentes configurations de polarisation sont obtenues successivement par rotation du polariseur linéaire (12, 22) et/ou de la lame quart d'onde (14, 24) grâce aux moyens d'entraînement (40).

**4.** Procédé selon la revendication 3, caractérisé par le fait que l'étape i) consiste à enregistrer 4 hologrammes conoscopiques selon les configurations de polarisation respectives suivantes :

1) $\alpha_a = \alpha_b = +/- \pi/4$
2) $\alpha_a = -\alpha_b = +/- \pi/4$
3) $\alpha_a = O$ et $\alpha_b = +\pi/4$
4) $\alpha_a = O$ et $\alpha_b = -\pi/4$

$\alpha_a$ représentant l'écart angulaire entre les axes principaux de polarisation ($\phi_0$,$\phi_1$) d'un polariseur linéaire (12) et de la lame quart d'onde associée (14) d'un polariseur circulaire (10), et

$\alpha_b$ représentant l'écart angulaire entre les axes principaux de polarisation ($\phi_2$,$\phi_3$) du polariseur linéaire (22) et de la lame quart d'onde associée (24) de l'autre polariseur circulaire (20).

**5.** Procédé selon la revendication 4, caractérisé par le fait que les quatre configurations de polarisation permettent d'enregistrer 4 hologrammes conoscopiques répondant respectivement aux fonctions de transfert suivantes :

1) $T_a = 1 + \cos\alpha r^2$
2) $T_b = 1 - \cos\alpha r^2$
3) $T_c = 1 - \sin2(\psi - \phi_o)\sin\alpha r^2$
4) $T = 1 + \sin2(\psi - \phi_o)\sin\alpha r^2$,

et que l'étape ii) consiste à :

a) combiner linéairement $T_a$ et $T_b$ d'une part, $T_c$ et $T_D$ d'autre part, pour obtenir les fonctions de transfert suivantes :

$$T_o = \cos\alpha r^2$$
$$T_1(\phi_o) = \sin[2(\psi - \phi_o)]\sin\alpha r^2$$

soit en prenant respectivement $\phi_o = O$ et $\phi_o = \pi/4$ :

$$T_1(0) = \sin2\psi\sin\alpha r^2$$
$$T_1(\pi/4)) = \cos2\psi \sin\alpha r^2$$

b) déterminer les transformées de Fourier $\tilde{T}_o$ et $\tilde{T}_1$ des fonctions de transfert précitées $T_o$ et $T_1$,
c) établir la combinaison linéaire suivante

$$\tilde{T}_2 = \tilde{T}_o + j\,\sin2\theta\,\tilde{T}_1(0) + j\,\cos2\theta\,\tilde{T}_1(\pi/4) \text{ et}$$

d) retrancher $j\beta_o/\pi$ de $\tilde{T}_2$ si $\beta\rho^2 \ll 1$ ou retrancher $j\tilde{T}_o/(\beta_o\rho^2)$ de $\tilde{T}_2$ pour des valeurs de $\beta\rho^2$ plus élevées, afin d'obtenir l'hologramme complexe,

avec $\psi$ représentant l'inclinaison, par rapport à un plan de référence passant par l'axe optique du système, d'un plan défini par le même axe optique et le vecteur d'onde $\vec{S}$ incident,

$$r^2 = x'^2 - y'^2$$

$x'$,$y'$ représentent les coordonnées dans le plan de l'hologramme,

$\theta$, $\rho$ représentent les variables correspondant à $\psi$ et $r$ dans le domaine spectral,

$$\beta = \pi^2/\alpha \text{ et}$$

$\beta_o$ correspond au plan moyen de l'objet.

**6.** Procédé selon l'une des revendications 1 et 2, caractérisé par le fait que les différentes configurations sont obtenues successivement en intercalant des polariseurs adaptés en amont ou en aval du cristal biréfringent (30).

**7.** Procédé selon l'une des revendications 1 et 2, caractérisé par le fait que les différentes configurations de polarisation sont obtenues simultanément grâce à un polariseur formé d'un réseau de P lignes et Q colonnes de matrices (25) soit PQ matrices formées chacune de 4 sous éléments correspondant respectivement aux polarisations requises.

12

EP 0 376 837 B1

**8.** Procédé selon l'une des revendications 1 à 7, caractérisé par le fait que l'étape ii) de reconstruction numérique, comprend la multiplication, par un terme de phase, de l'hologramme débarassé du fond continu et de l'image conjuguée.

**9.** Procédé selon l'une des revendications 1 à 7, caractérisé par le fait que l'étape ii) de reconstruction numérique, comprend la convolution de l'hologramme débarassé du fond continu et de l'image conjuguée, avec la fonction de Fresnel $\cos(\alpha r^2)$.

**10.** Procédé selon l'une des revendications 1 à 7, caractérisé par le fait que l'étape ii) de reconstruction numérique comprend l'étape consistant a soumettre l'hologramme débarassé du fond continu et de l'image conjuguée à un filtrage de Wiener.

**11.** Procédé selon l'une des revendications 1 à 7, caractérisé par le fait que dans le cas d'objets tridimensionnels l'étape ii) de reconstruction numérique comprend les étapes consistant à :

a) déterminer une première approximation des fonctions $\alpha(x,y)$ et $I(x,y)$ réelles en écrivant l'hologramme sous forme d'une série de convolution

$$H = \sum_{n=0}^{n=\infty} a_n I_n * T_n,$$

et en ne conservant que les deux premiers termes dans le développement en série,

b) calculer les termes suivants dans le développement sur la base des premières approximations, puis

c) soustraire les termes obtenus de l'hologramme de départ et résoudre une nouvelle fois l'équation au second ordre.

**12.** Dispositif pour la mise en oeuvre du procédé conforme à l'une des revendications 1 à 11 du type comprenant un système conoscopique comportant un cristal biréfringent (30) inséré entre deux polariseurs circulaires (10, 20), caractérisé par le fait qu'il comprend :

- des moyens (10, 20, 30, 40, 50) permettant d'enregistrer à l'aide dudit système conoscopique différents hologrammes conoscopiques d'un même objet, sans déplacement relatif de celui-ci, selon différentes configurations de polarisation respectives du système conoscopique, et des moyens permettant de numériser la pluralité de différents hologrammes, afin de former une pluralité de signaux numériques, chacun correspondant à un des hologrammes conoscopiques,
- des moyens (60) aptes à reconstruire numériquement une image de l'objet, la reconstruction incluant la combinaison de ces signaux, d'une telle manière que les informations correspondant au fond continu et à l'image conjuguée sont supprimées dans l'image reconstruite.

**13.** Dispositif selon la revendication 12, caractérise par le fait qu'il comprend au moins un polariseur circulaire (10, 20) formé d'un polariseur linéaire (12, 22) et d'une lame quart d'onde (14, 24) susceptibles de rotation relative, et des moyens d'entraînement en rotation (40) du polariseur linéaire (12, 22) et/ou de la lame quart d'onde (14, 24) pour modifier la configuration de polarisation.

**14.** Dispositif selon la revendication 12, caractérisé par le fait qu'il comprend des moyens aptes à intercaler sélectivement des polariseurs adaptés en amont ou en aval du cristal biréfringent pour modifier la configuration de polarisation.

**15.** Dispositif selon la revendication 12, caractérisé par le fait qu'il comprend un polariseur formé d'un réseau de P lignes et Q colonnes de matrices (25) soit PQ matrices formées chacune de 4 sous-éléments (26, 27, 28, 29) correspondant respectivement aux polarisations requises.

**16.** Dispositif selon l'une des revendications 12 à 15, caractérisé par le fait que les moyens d'enregistrement (50) comprennent une caméra telle qu'une caméra à transfert de charge, couplée à une mémoire numérique.

13

**Claims**

1. A method of reconstruction of an image of an object without interfering images by generating an hologram using incoherent light comprising the following steps :

   i) recording through a conoscope system comprising a birefringent crystal (30) inserted between two circular polarizers (10, 20) a plurality of different conoscopic holograms of the same object without relative displacement thereof and with respective different polarization configurations of the conoscope system; and digitalizing the plurality of different holograms so as to form a plurality of digital signals, each corresponding to one of the conoscopic holograms,

   ii) digitally reconstructing an image of the object, the reconstruction including the combination of these signals so that the informations corresponding to the bias and the conjugate image are eliminated from the reconstructed image.

2. A method according to claim 1, characterized by the fact that step i) consists in recording four conoscopic holograms of the same object without relative displacement thereof and at respective different polarization configurations.

3. A method according to claim 1 or 2, characterized by the fact that the circular polarizers (10, 20) are constituted by respective linear polarizers (12, 22) and respective quarterwave plates (14, 24) capable of relative rotation and coupled to rotary drive means (40), with the various polarization configurations being obtained in succession by rotating a linear polarizer (12, 22) and/or a quarterwave plate (14, 24) by using the drive means (40).

4. A method according to claim 3, characterized by the fact that step i) consists in recording 4 conoscopic holograms in the following respective polarization configurations :

   1) $\alpha_a = \alpha_b = +/- \pi/4$
   2) $\alpha_a = -\alpha_b = +/- \pi/4$
   3) $\alpha_a = 0$ and $\alpha_b = + \pi/4$
   4) $\alpha_a = 0$ and $\alpha_b = -\pi/4$ where

   $\alpha_a$ represents the angular differed between the principle polarization axes ($\phi_0$, $\phi_1$) of the linear polarizer (12) and the associated quarterwave plate (14) of one of the circular polarizers (10); and

   $\alpha_b$ represents the angular difference between the principle polarization axes ($\phi_2$, $\phi_3$) of the linear polarizer (22) and the associated quarterwave plate (24) of the other circular polarizer (20).

5. A method according to claim 4, characterized by the fact that the four polarization configurations enable four conoscopic holograms to be recorded satisfying the following transfer functions respectively:

   1) $T_a = 1 + \cos\alpha r_2$
   2) $T_b = 1 - \cos\alpha r_2$
   3) $T_c = 1 - \sin 2(\psi - \phi_0)\sin\alpha r^2$
   4) $T_d = 1 + \sin 2(\psi - \phi_0)\sin\alpha r^2$

   and that step ii) consists in:

   a) linearly combining firstly $T_a$ and $T_b$, and secondly $T_c$ and $T_d$ to obtain the following transfer functions:

   $T_0 = \cos\alpha r^2$
   $T_1(\phi_0) = \sin[2(\psi - \phi_0)]\sin\alpha r^2$

   which, putting $\phi_0 = 0$ and $\phi_0 = \pi/4$ reduce respectively to:

   $T_1(0) = \sin[2(\psi - \phi_0)]\sin\alpha r^2$
   $T_1(\pi/4) = \cos 2\psi.\sin\alpha r^2$

   b) determining the Fourier transform $\tilde{T}_0$ and $\tilde{T}_1$ of the abode-mentioned transfer functions $T_0$ and $T_1$;

   c) performing the following linear combination

   $$\tilde{T}_2 = \tilde{T}_0 + j \sin 2\phi \, \tilde{T}_1(0) + j \cos 2\phi \, \tilde{T}_1(\pi/4); \text{ and}$$

14

d) subtracting $j\beta_0/\pi$ from $\tilde{T}_2$ if $\beta\rho^2 \ll 1$, or subtracting $j\tilde{T}_0/(\beta_0\rho^2)$ from $\tilde{T}_2$ for higher values $\beta\rho^2$, in order to obtain the complex hologram, where:

$\psi$ represents the slope relative to a reference plane including the optical axis of the system of a plane defined by the same optical axis and by the incident wave vector $\vec{S}$;

$$r^2 = x'^2 + y'^2$$

where

x',y' represents coordinates in the plane of the hologram;

$\phi$ and $\rho$ represent variables corresponding to $\tilde{T}$ and r in the spectrum domain;

$\beta = \pi^2/\lambda$; and

$\beta_0$ corresponds to the mean plane of the object.

6. A method according to claim 1 or 2, characterized by the fact that the various configurations are obtained successively by interposing appropriate polarizers upstream or downstream from the birefringent crystal (30).

7. A method according to claim 1 or 2, characterized by the fact that the various polarization configurations are obtained simultaneously by means of a polarizer constituted by a lattice of P lines by Q columns of matrices (25), i.e. PQ matrices, each constituted by four subelements corresponding to respective ones of the required polarizations.

8. A method according to any one of claims 1 to 7, characterized by the fact that step ii) of digital reconstruction of the hologram after removable of its bias and its conjugate image, comprises multiplying the hologram by a phase turn.

9. A method according to any one of claims 1 to 7, characterized by the fact that step ii) of digital reconstruction by convolution of the hologram with its bias and conjugate image removed, comprises the convolution being with the Fresnel function $\cos(\alpha r^2)$.

10. A method according to any one of claims 1 to 7, characterized by the fact that step ii) of digital reconstruction comprises subjecting the hologram with its bias and conjugate image removed therefrom to Wiener filtering.

11. A method according to any one of claims 1 to 7, characterized by the fact that for three dimensional objects, step ii) of digital reconstruction comprises the steps consisting in :

a) determining real functions $\alpha(x,y)$ and $I(x,y)$ to a first approximation by writing the hologram in the form of a convolution series

$$H = \sum_{n=0}^{n=\infty} \alpha_n I_n * T_n$$

and in retaining only the first two terms in the series development;

b) calculating the following terms in the development on the basis of the first approximations; then

c) subtracting the terms obtained from the initial hologram and solving the second order equation again.

12. Apparatus for implementing the method of any one of claims 1 to 11, the apparatus being of the type comprising a conoscopic system including a birefringent crystal (30) inserted between two circular polarizers (10, 20) the device being characterized by the fact that it comprises :

means (10, 20, 30, 40, 50) for recording with said conoscopic system a plurality of conoscopic holograms of the same object without relative displacement thereof, at different respective polarization configurations of the conoscopic system; and

means suitable to digitalize the plurality of different holograms, so as to form the plurality of digital signals, each corresponding to one of the conoscopic holograms,

means (60) suitable for digitally reconstructing an image of the object, the reconstruction including the combination of these signals, so that the informations corresponding to the bias and the conjugate image are eliminated in the reconstructed image.

13. A device according to claim 12, characterized by the fact that it includes at least one circular polarizer (10, 20) constituted by a linear polarizer (12, 22) and a quarterwave plate (14, 24) capable of relative rotation, together with rotary drive means (40) for the linear polarizer (12, 22) and/or the quarterwave plate (14, 24) in order to change the polarization configuration.

14. A device according to claim 12, characterized by the fact that it includes means suitable for selectively interposing suitable polarizers upstream or downstream from the birefringent crystal in order to change the polarization configuration.

15. A device according to claim 12, characterized by the fact that it includes a polarizer constituted by a lattice of P lines by Q columns of matrices (25), i.e. PQ matrices, each constituted by four subelements (26, 27, 28, 29) corresponding to respective ones of the required polarizations.

16. A device according to any one of claims 12 to 15, characterized by the fact that the recording means (50) comprise a camera such as a CCD camera coupled to a digital memory.

**Patentansprüche**

1. Verfahren zur Rekonstruktion eines Bildes eines Objektes ohne Nebenbilder mit der Erzeugung eines Hologramms mit inkohärentem Licht mit Schritten wie folgt:
   - i) Aufzeichnung mehrerer unterschiedlicher konoskopischer Hologramme von ein und demselben Objekt ohne Relativbewegung desselben über ein konoskopisches System, welches einen zwischen zwei kreisförmigen Polarisatoren (10, 20) eingefügte, doppelbrechenden Kristall (30) umfaßt, gemäß unterschiedlichen jeweiligen Polarisationskonfigurationen des konoskopischen Systems, und
   Digitaliesirung der Mehrzahl von unterschiedlichen Hologrammen, um eine Mehrzahl von numerischen Signalen zu bilden, von denen jedes mit einem der konoskopischen Hologramme korrespondiert,
   - ii) numerische Rekonstruktion eines Bildes des Objektes, wobei die Rekonstruktion die Kombination der Signale in der Weise einschließt, daß die dem stetigen Hintergrund und dem zugeordneten Bild entsprechenden Informationen in dem rekonstruierten Bild unterdrückt werden.

2. Verfahren nach Anspruch 1, dadurch gekennzeichnet, daß der Schritt i) darin besteht, vier konoskopische Hologramme von ein und demselben Objekt ohne Relativbewegung desselben gemäß jeweils unterschiedlichen Polarisationskonfigurationen aufzuzeichnen.

3. Verfahren nach Anspruch 1 oder 2, dadurch gekennzeichnet, daß die kreisförmigen Polarisatoren (10, 20) von einem linearen Polarisator (12, 22) und von einem Viertelwellenlängenplättchen (14, 24) gebildet werden, welche eine Relativbewegung zu erfahren vermögen und an Drehantriebsmittel (40) gekoppelt sind, und daß die unterschiedlichen Polarisationskonfigurationen nacheinander durch Drehung des Linearpolarisators (12, 22) und/oder des Viertelwellenlängenplättchens (14, 24) mit Hilfe der Antriebsmittel (40) erhalten werden.

4. Verfahren nach Anspruch 3, dadurch gekennzeichnet, daß der Schritt (i) darin besteht, vier konoskopische Hologramme jeweils nach den folgenden Polarisationskonfigurationen aufzuzeichnen:
   1) $\alpha_a = \alpha_b = +/-\pi/4$
   2) $\alpha_a = -\alpha_b = +/-\pi/4$
   3) $\alpha_a = 0$ und $\alpha_b = +\pi/4$
   4) $\alpha_a = 0$ und $\alpha_b = -\pi/4$
   wobei $\alpha_a$ den Drehwinkel zwischen den Hauptpolarisationsachsen ($\Phi_0$, $\Phi_1$) eines Linearpolarisators (12) und des zugeordneten Viertelwellenlängenplättchens (14) eines kreisförmigen Polarisators (10) und $\alpha_b$ den Drehwinkel zwischen den Hauptpolarisationsachsen ($\Phi_2$, $\Phi_3$) des linearen Polarisators (22) und des Viertelwellenlängenplättchens des anderen kreisförmigen Polarisators (20) darstellen.

5. Verfahren nach Anspruch 4, dadurch gekennzeichnet, daß die vier Polarisationskonfigurationen es ermöglichen, vier konoskopische Hologramme aufzuzeichnen, welche jeweils den folgenden Übertragungsfunktionen entsprechen:

1) $T_a = 1 + \cos\alpha r^2$

2) $T_b = 1 - \cos\alpha r^2$

3) $T_c = 1 - \sin2(\psi - \Phi_0)\sin\alpha r^2$

4) $T = 1 + \sin2(\psi - \Phi_0)\sin\alpha r^2$

und daß der Schritt ii) in folgendem besteht:

a) lineare Kombination von $T_a$ und $T_b$ einerseits sowie von $T_c$ und $T_D$ andererseits, um die folgenden Übertragungsfunktionen zu erhalten:

$T_0 = \cos\alpha r^2$

$T_1(\Phi_0) = \sin[2(\psi - \Phi_0)]\sin\alpha r^2$

das ergibt unter der Annahme von

$\Phi_0 = 0$ und $\Phi_0 = \pi/4$:

$T_1(0) = \sin2\psi\ \sin\alpha r^2$

$T_1(\pi/4) = \cos2\psi\ \sin\alpha r^2$

b) Bestimmung der Fourier-Transformationen $T_0$ und $T_1$ der vorgenannten Übertragungsfunktionen $T_0$ und $T_1$,

c) Erstellung der folgenden Linearkombination

$$\widetilde{T}_2 = \widetilde{T}_0 + j\ \sin2\Theta\widetilde{T}_1(0) + j\ \cos2\Theta\widetilde{T}_1(\pi/4)\ \text{und}$$

d) Abzug von $j\beta_0/\pi$ von $\widetilde{T}_2$, wenn $\beta\rho^2 \ll 1$ oder Abzug von $j\widetilde{T}_0/(\beta_0\rho^2)$ von $\widetilde{T}_2$ für höhere Werte von $\beta\rho^2$, bis man das komplexe Hologramm erhält,

wobei $\psi$ die Neigung einer Ebene gegenüber einer durch die optische Achse des Systems gehenden Bezugsebene repräsentiert, und zwar einer Ebene, welche durch dieselbe optische und den einfallenden Wellenvektor S definiert ist, mit

$r^2 = x'_2 + y'^2$,

wobei x', y' die Koordinaten in der Ebene des Hologramms bezeichnen,

wobei $\Theta,\rho$ die in dem Spektralbereich mit $\psi$ und r korrespondierenden Variablen darstellen,

mit $\beta = \pi^2/\alpha$ und

$\beta_0$ mit der Mittelebene des Objektes korrespondiert.

6. Verfahren nach einem der Ansprüche 1 und 2, dadurch gekennzeichnet, daß die unterschiedlichen Konfigurationen nacheinander unter Zwischenschaltung von angepaßten Polarisatoren vor oder hinter dem doppelbrechenden Kristall (30) erhalten werden.

7. Verfahren nach einem der Ansprüche 1 und 2, dadurch gekennzeichnet, daß die unterschiedlichen Polarisationskonfigurationen gleichzeitig durch einen Polarisator erhalten werden, welcher durch ein Netz von P Reihen und Q Spalten von Matrizen (25) gebildet wird, unter der Voraussetzung, daß PQ Matrizen, von denen jede durch vier Unterelemente gebildet ist und jeweils den erforderlichen Polarisationen entspricht.

8. Verfahren nach einem der Ansprüche 1 bis 7, dadurch gekennzeichnet, daß der Schritt ii) der numerischen Rekonstruktion die Multiplikation des von dem stetigen Hintergrund und dem zugeordneten Bild befreiten Hologramms mit einem Phasenterm umfaßt.

9. Verfahren nach einem der Ansprüche 1 bis 7, dadurch gekennzeichnet, daß der Schritt ii) der numerischen Rekonstruktion die Faltung des von dem stetigen Hintergrund und dem zugehörigen Bild befreiten Hologramms mit der Fresnelfunktion $\cos(\alpha r^2)$ umfaßt.

17

**10.** Verfahren nach einem der Ansprüche 1 bis 7, dadurch gekennzeichnet, daß der Schritt ii) der numerischen Rekonstruktion den Schritt umfaßt, welcher darin besteht, das von dem stetigen Hintergrund und dem zugehörigen Bild befreite Hologramm einer Wiener-Filterung zu unterziehen.

**11.** Verfahren nach einem der Ansprüche 1 bis 7, dadurch gekennzeichnet, daß im Falle dreidimensionaler Objekte der Schritt ii) der numerischen Rekonstruktion Schritte umfaßt, welche in folgendem bestehen:
a) Bestimmen einer ersten Näherung der reellen Funktionen $\alpha(x, y)$ und $I(x, y)$ durch Schreiben des Hologramms in Form einer Konvolutionsreihe

$$H = \sum_{n=0}^{n=\infty} a_n I_n * T_n,$$

wobei nur die beiden ersten Ausdrücke in der Entwicklung der Reihe behalten werden,
b) Berechnung der nachfolgenden Ausdrücke in der Entwicklung auf der Grundlage der ersten Näherungen und dann
c) Subtraktion der erhaltenen Ausdrücke von dem Ausgangshologramm und erneute Lösung der Gleichung in der zweiten Ordnung.

**12.** Vorrichtung zur Durchführung des Verfahren nach einem der Ansprüche 1 bis 11 mit einem konoskopischen System, welches einen doppelbrechenden Kristall (30) unifaßt, der zwischen zwei Kreispolarisatoren (10, 20) angeordnet ist, dadurch gekennzeichnet, daß er umfaßt:
- Mittel (10, 20, 30, 40, 50), welche es ermöglichen, mit Hilfe des genannten konoskopischen Systems unterschiedliche konoskopische Hologramme von demselben Objekt ohne Relativbewegung desselben gemäß unterschiedlichen jeweiligen Polarisationskonfigurationen des konoskopischen Systems aufzuzeichnen,
- Mittel, welche es ermöglichen, die Mehrzahl von unterschiedlichen Hologrammen zu digitalisieren, um eine Mehrzahl von numerischen Signalen zu bilden, von denen jedes mit einem der konoskopischen Hologramme korrespondiert, und
- Mittel (60), welche in der Lage sind, ein Bild des Objektes numerisch zu rekonstruieren, wobei die Rekonstruktion die Kombination dieser Signale derart einschließt, daß die dem stetigen Hintergrund und dem zugeordneten Bild entsprechenden Informationen in dem rekonstruierten Bild unterdrückt werden.

**13.** Vorrichtung nach Anspruch 12, dadurch gekennzeichnet, daß sie mindestens einen Kreispolarisator (10, 20) umfaßt, welcher von einem linearen Polarisator (12, 22) und von einem Viertelwellenlängenplättchen (14, 24) gebildet werden, die eine Relativdrehung zu erfahren vermögen, sowie Mittel zum Drehantrieb (40) des linearen Polarisators (12, 22) und/oder des Viertelwellenlängenplättchens (14, 24), um die Polarisationskonfiguration zu verändern.

**14.** Vorrichtung nach Anspruch 12, dadurch gekennzeichnet, daß sie Mittel umfaßt, welche in der Lage sind, wahlweise angepaßte Polarisatoren vor oder hinter dem doppelbrechenden Kristall zwischenzuschalten, um die Polarisationskonfiguration zu verändern.

**15.** Vorrichtung nach Anspruch 12, dadurch gekennzeichnet, daß sie einen Polarisator umfaßt, der durch ein Netz von P Reihen und Q Spalten von Matrizen (25) gebildet wird, wobei vorausgesetzt wird, daß PQ Matrizen, jede von vier Unter-Elementen (26, 27, 28, 29) gebildet wird und jeweils den erforderlichen Polarisationen entspricht.

**16.** Vorrichtung nach einem der Ansprüche 12 bis 15, dadurch gekennzeichnet, daß die Aufzeichnungsmittel (50) eine Kamera, wie etwa eine Kamera mit Ladungsübertragung umfaßt, welche mit einem Digitalspeicher gekoppelt ist.

# FIG.1 Etat de la technique

axe
optique

P
P'
objet

polariseur
circulaire

cristal
uniaxe

polariseur
circulaire

Q
Q'

plan
d'enregistrement

CONOSCOPE

# FIG.2 HOLOGRAMME D'UN POINT

FIG_3

CONOSCOPE

| POLARISEUR | CRISTAL BIREFRIN--GENT | POLARISEUR |

30 20 10

MOYENS DE CONTROLE DE LA POLARISATION

40

MOYENS D'ENREGISTREMENT ET NUMERISATION ( EX. CAMERA CCD )

50

MOYENS DE TRAITEMENT ( ELIMINATION DU FOND CONTINU ET DE L'IMAGE CONJUGUEE)

60

EXPLOITATION

( RECONSTRUC--TION

ET

VISUALISATION)

70

FIG_6

90

LAMPE AU SODIUM

S

caméra CCD

partie active de la caméra

conoscope 2β

OPTIQUE 80

$z_c$

signal vidéo

commande électromécanique

ECRAN VIDEO 70

processeur vectoriel

carte FFT

60

sortie de la carte de numérisation

## FIG_4

## FIG_5

| $\alpha_1$ | $\alpha_2$ | T |
|---|---|---|
| $+\dfrac{\pi}{4}$ | $+\dfrac{\pi}{4}$ | $1 + \cos\alpha\, r^2$ |
| $-\dfrac{\pi}{4}$ | $-\dfrac{\pi}{4}$ | |
| $+\dfrac{\pi}{4}$ | $-\dfrac{\pi}{4}$ | $1 - \cos\alpha\, r^2$ |
| $-\dfrac{\pi}{4}$ | $+\dfrac{\pi}{4}$ | |
| $0$ | $+\dfrac{\pi}{4}$ | $1 - \sin 2(\psi-\phi_o)\sin\alpha\, r^2$ |
| $0$ | $-\dfrac{\pi}{4}$ | $1 + \sin 2(\psi-\phi_o)\sin\alpha\, r^2$ |

FIG_7A

25 25 25 25 25

FIG_7B

25 25 25

| $\alpha_1 = \alpha_2$ $= \pm \pi/4$ | $\alpha_1 = -\alpha_2$ $= \pm \pi/4$ | $\alpha_1 = \alpha_2$ $= \pm \pi/4$ | $\alpha_1 = -\alpha_2$ $= \pm \pi/4$ | $\alpha_1 = \alpha_2$ $= \pm \pi/4$ | $\alpha_1 = -\alpha_2$ $= \pm \pi/4$ |
|---|---|---|---|---|---|
| $\alpha_2 = +\pi/4$ $\alpha_1 = 0$ | $\alpha_2 = -\pi/4$ $\alpha_1 = 0$ | $\alpha_2 = +\pi/4$ $\alpha_1 = 0$ | $\alpha_2 = -\pi/4$ $\alpha_1 = 0$ | $\alpha_2 = +\pi/4$ $\alpha_1 = 0$ | $\alpha_2 = -\pi/4$ $\alpha_1 = 0$ |
| $\alpha_1 = \alpha_2$ $= \pm \pi/4$ | $\alpha_1 = -\alpha_2$ $= \pm \pi/4$ | $\alpha_1 = \alpha_2$ $= \pm \pi/4$ | $\alpha_1 = -\alpha_2$ $= \pm \pi/4$ | $\alpha_1 = \alpha_2$ $= \pm \pi/4$ | $\alpha_1 = -\alpha_2$ $= \pm \pi/4$ |
| $\alpha_2 = +\pi/4$ $\alpha_1 = 0$ | $\alpha_2 = -\pi/4$ $\alpha_1 = 0$ | $\alpha_2 = +\pi/4$ $\alpha_1 = 0$ | $\alpha_2 = -\pi/4$ $\alpha_1 = 0$ | $\alpha_2 = +\pi/4$ $\alpha_1 = 0$ | $\alpha_2 = -\pi/4$ $\alpha_1 = 0$ |

26 27 28 26 27 25 25 26 27 29

28 29 27 28 25 29 28 25 29